# EUROPÄISCHE PATENTSCHRIFT

(11) **EP 2 764 277 B1**
(45) Veröffentlichungstag und Bekanntmachung des Hinweises auf die Patenterteilung: **01.07.2015**
(21) Anmeldenummer: 12772229.6
(22) Anmeldetag: 04.10.2012
(51) Int. Cl.: F16G 5/20

(54) **KEILRIPPENRIEMEN UND VERFAHREN ZU DESSEN HERSTELLUNG**
V-RIBBED BELT AND METHOD FOR PRODUCING SAME
COURROIE TRAPÉZOÏDALE À NERVURES ET PROCÉDÉ DE FABRICATION CORRESPONDANT

(30) Priorität: 06.10.2011 DE 102011114918
(43) Veröffentlichungstag der Anmeldung: 13.08.2014
(73) Patentinhaber: Arntz Beteiligungs GmbH & Co. KG, 37671 Höxter (DE)
(72) Erfinder: LOTZ, Florian, 37647 Brevörde (DE); KOPMANN, Dennis, 30827 Garbsen (DE)
(74) Vertreter: Lins, Edgar
(86) Internationale Anmeldenummer: PCT/EP2012/004143
(87) Internationale Veröffentlichungsnummer: WO 2013/050142

(56) Entgegenhaltungen:
- EP-A1- 0 198 308
- EP-A2- 2 128 486

## Beschreibung

Die Erfindung betrifft Keilrippenriemen, englisch "Poly-V-belts" oder "ripped bands" gelegentlich auch als Rippenband bezeichnet, und Verfahren zu dessen Herstellung.

Keilrippenriemen werden auf verschiedenen technischen Gebieten verwendet, insbesondere als Endlostransmissionsriemen. Sie zeichnen sich dadurch aus, dass der Riemen auf seiner der Riemenscheibe zugewandten Seite mehrere längslaufende Rippen aufweist, die mit einer mehrrilligen Riemenscheibe zusammenwirken. Die Rippenzahl ist größer gleich 2 und liegt im Allgemeinen zwischen 3 und 10 Keilrippen. Die Krafteinleitung zwischen Riemenscheibe und Riemen erfolgt über die Rippenflanken.

Es gibt industriell genormte Rippenprofile. Dabei besitzen die Profile PH, PJ, PK, PL, PM Riemengesamthöhen zwischen 2 und 15,0 mm bei Rippenabständen zwischen 1,6 und 9,4 mm. Die Rippenhöhen betragen dabei etwa zwischen 1 und 9 mm.

Die Rippenriemen haben generell den für Transmissionsriemen üblichen Aufbau aus folgenden Zonen:
1. dem Riemenrücken bzw. der von der Riemenscheibe abgewandten Dehnzone,
2. eine Lastträgerzone mit in Umfangsrichtung verlaufenden beispielsweise gewickelten Zugträgern aus Seilen, Corden oder Bändern;
3. einen Unterbau bzw. eine zur Riemenscheibe gerichtete Kompressionszone, an der die Rippen für den Eingriff in die Rillen der Riemenscheibe ausgebildet sind.

Der gesamte Riemenkörper und insbesondere der Unterbau besteht dabei aus wenigstens einem Hochleistungselastomer, traditionell einem Gummielastomer.

Um die mechanischen Eigenschaften und die Laufleistung der Riemen zu verbessern, werden heute vermehrt neue Elastomerwerkstoffe eingesetzt, die häufig elektrisch nicht leitend sind. Es kommt daher zu elektrostatischen Aufladungen des Riemens während des Laufs.

Während ein Keilriemen üblicherweise in der einzelnen Rille der zugehörigen Riemenscheibe versenkt verläuft und so seitlich vollständigen Kontakt zur Riemenscheibe besitzt, ist dies bei einem Keilrippenriemen nicht der Fall, da die Riemenscheibe nur frontal in die Zwischenräume zwischen den Rippen eingreift, sodass der Riemen am Umfang der Riemenscheibe aufliegt. Riemenrücken und Zugträgerschicht besitzen dabei keinen Kontakt zur Riemenscheibe; der Kontakt wird ausschließlich über die Rippenflanken hergestellt.

Bei Rippenriemen ist es daher nicht möglich, die Ableitung elektrostatischer Aufladungen über eine leitfähige textile Schicht auf dem Riemenrücken zu bewirken. Auch die vollständige Ummantelung des Rippenriemens mit einem leitfähigen textilen Material ist wegen der spitzwinkeligen Täler zwischen den steilen Rippenflanken nicht machbar bzw. verringert die Riemenqualität deutlich. Eine vollständige Beschichtung oder Ummantelung der Rippen macht außerdem die mechanische Wirkung des darunter liegenden Hochleistungselastomers bei der Krafteinleitung zunichte.

Aus der WO 2009/16797 A1 ist ein Rippenriemen bekannt, dessen Rippenelastomer Kurzfasern und punktförmig verteilten großkörnigen Kohlenstoff enthält. Fasern sowie größere Partikel aus Fremdstoffen beeinflussen jedoch die mechanisch-dynamischen Eigenschaften des Elastomers der Kraftübertragungszone negativ, sodass dieses Verfahren nicht die Methode der Wahl sein kann.

Aus der EP 0 198 308 A1 ist ein antistatischer Antriebsriemen bekannt, bei dem eine dünne Schicht aus leitfähig gemachtem Gummielastomer zwischen der Zugträgereinbettungszone und der Kraftübertragungszone eingezogen ist. Die elektrisch leitfähige Schicht liegt seitlich am Riemen offen, um im Betrieb erzeugte elektrostatische Ladung nach außen abzuleiten.

Aus der EP 2 128 486 A2 ist ein Keilrippenriemen mit mehreren Rippen für den Eingriff in eine mehrrillige Riemenscheibe bekannt, der auf der Kraftübertragungsseite wenigstens zwei unterschiedliche Elastomermaterialien aufweist. Der Riemen ist für die Optimierung der Geräuschreduktion ausgelegt und kann rippenseitig eine Beschichtung mit Kurzfasern, vorzugsweise aus Baumwolle oder Synthetikfasern, aufweisen.

Der Erfindung liegt-daher die Aufgabe zugrunde, einen Rippenriemen, für dessen Rippen ein nicht-leitfähiges Elastomer verwendet werden soll, das in direkten Kontakt mit der Riemenscheibe treten soll, so auszubilden, dass elektrostatische Aufladungen von dem Riemen wirksam abgeleitet werden können.

Die Aufgabe wird bei einem Rippenriemen mit mehreren Rippen für den Eingriff einer mehrrilligen Riemenscheibe, wobei der Riemen wenigstens zwei unterschiedliche Elastomermaterialien aufweist, dadurch gelöst, dass
- die oberen, zur Riemenscheibe weisenden Rippenabschnitte aus einem elektrisch nicht leitendem Elastomermaterial bestehen,
- die unteren Rippenabschnitte aus einem elektrisch leitendem Elastomermaterial bestehen und
- das Höhenverhältnis a/(a+b) der Höhe a der unteren Rippenabschnitte zur Gesamthhöhe a+b der Rippe, gemessen an der an der Rippenflanke auftretenden Materialgrenze, wenigstens 6 % beträgt oder die Absoluthöhe a der unteren Rippenabschnitte wenigstens 0,12 mm beträgt.

Der Kern der Erfindung besteht darin, die Rippen des Rippenriemens in einem zusammenhängenden oberen, die Rippenspitze umfassenden Rippenbereich oder -abschnitt aus einem im Wesentlichen nicht-leitfähigen Elastomermaterial zu bilden und in einem daran angrenzenden zusammenhängenden unteren Rippenbereich oder -abschnitt, der sich bis wenigstens zum Fußpunkt der Rippe bzw. zum Rippental erstreckt, aus einem leitfähigen Elastomermaterial zu bilden, das zum Ableiten elektrostatischer Ladungen über die Riemenscheibe geeignet ist. Der übrige Riemenkörper, insbesondere der Rücken und die Cordeinbettung, können aus einem der Rippenmaterialien oder einem anderen für diese Schichten bzw. Teile des Aufbaus bekanntem Material bestehen.

Überraschenderweise wurde gefunden, dass die Absoluthöhe des unteren Rippenabschnitts verhältnismäßig klein sein kann. Hieraus ergeben sich mehrere Vorteile.
- Der Riemen kann auf einfache Weise kostengünstig gefertigt werden. Dafür wird ein Grundriemen in als solches bekannter Weise mehrschichtig aufgebaut und anschließend entweder mit einem Form- oder Prägeverfahren oder einem Schleifverfahren zum Rippenriemen weiterverarbeitet.
- Die Rippen sind flankenoffen, sodass die Riemenscheibe im oberen Rippenabschnitt mit einem beispielsweise wegen seiner mechanischen Eigenschaften ausgewählten, nicht-leitfähigen Elastomer über einen größeren durchgehenden Flankenbereich in Kontakt treten kann.
- Bei dem leitfähigen Elastomer des unteren Rippenabschnitts kann es sich um ein übliches und kostengünstig erhältliches mit Leitfähigkeitsruß gefülltes Elastomer handeln. Es kommt dennoch zu vergleichsweise wenig schwarzem Abrieb. Das abweichende Material des unteren Rippenabschnitts fällt optisch nicht ins Gewicht.
- Der Zielkonflikt zwischen guten mechanischen Eigenschaften und ausreichender, dauerhafter Leitfähigkeit im selben Material tritt nicht mehr auf.
- Selbst bei geringerer Höhe des oberen Rippenabschnitts lassen sich in Maßen verbesserte mechanische Eigenschaften mit einer gewünschten Optik verbinden: nicht rußgefüllte Elastomere können in der Regel eingefärbt werden, was beispielsweise zur verschiedenfarbigen Kennzeichnung unterschiedlicher Riementypen dienen kann. Wegen des besonderen Aufbaus eines Rippenriemens fallen bei der Ansicht vom Riemenunterbau her primär die Rippenspitzen auf, sodass sich eine Farbcodierung gut erkennen lässt.
- Ein weiterer zentraler Vorteil des neuen Keilrippenriemens ergibt sich daraus, dass der Massenverlust durch Abrieb an den Rippenflanken über die Laufzeit des Riemens zu einem tieferen Einlaufen der Riemenscheibe in den Riemenquerschnitt führt. Als Folge wird der Kontakt der Riemenscheibe zum leitfähigen Material des unteren Rippenabschnitts mit der Laufzeit besser, während eine oberflächliche Beschichtung mit der Zeit abgetragen würde, sodass ein solcher Riemen zu einem nicht näher bestimmbaren Zeitpunkt gefährliche elektrische Aufladungen entwickeln könnte.
- Bei dem nicht-leitfähigen Elastomermaterial des oberen Rippenabschnitts muss auf die Materialeigenschaft "Leitfähigkeit" keine Rücksicht genommen werden, sodass das Material vollständig auf andere Eigenschaften hin optimiert werden kann, beispielsweise auf den Reibbeiwert, Geräuscharmut, geringen Abrieb, Farbigkeit, Haptik oder beliebige andere Eigenschaften.

a = 0,12 mm wird als minimaler Absolutwert für die Höhe "a" angesehen, bei der der Kontakt der Riemenscheibe auch bei engen Rippenkonformationen immer gewährleistet ist.

Die minimale Absoluthöhe des unteren Rippenabschnitts von der Materialgrenze zum nicht-leitfähigen Material des oberen Rippenabschnitts bis zum Rippenfuß bzw. Rippental, bezieht sich vorzugsweise auf Profile mit einer Riemenhöhe zwischen 2,0 und 30 mm und einem Rippenabstand zwischen 1 mm und 16 mm bei Rippenhöhen von 1,8 bis 20 mm, insbesondere auf die Standardprofile PH, PJ, PK, PL und PM (Rippenabstand dort 1,6 mm bis 9,4 mm). Für größere oder kleinere Profile muss die Geometrie gesondert geprüft werden und die Absoluthöhe der unteren Rippenabschnitte muss auf die Eingrifftiefe der Riemenscheiben eingestellt und praktisch ausgetestet werden.

In bevorzugter Ausführungsform sind die unteren Rippenabschnitte zusammenhängend ausgebildet, d.h., dass die unteren Rippenabschnitte und eine angrenzende Zone, die die Rippentäler umfasst und sich über die gesamte Breite des Riemens erstreckt, insgesamt aus dem leitfähigen Elastomermaterial der unteren Rippenabschnitte bestehen. Dies gewährleistet erstens den vollständigen Kontakt der Riemenscheiben-Umfangskanten mit leitfähigem Material und bewirkt ebenfalls eine sofortige bessere Verteilung sich aufbauender elektrostatischer Aufladungen auf die verschiedenen Ableitungszonen einer mehrrilligen Scheibe.

Die über die Riemenbreite durchgehende leitfähige Zone ermöglicht es, die Absoluthöhe der unteren Rippenabschnitte und damit die Kontaktzone an den Rippenflanken im Bereich der Rippentäler besonders klein zu halten und dennoch die Leitfähigkeit auch für verschiedenste Transmissionsgeometrien immer sicherzustellen. Generell ist dabei die Leitfähigkeit für jede sich während der Laufzeit des Riemens einstellende Geometrie gewährleistet. Abrieb oder Einschneiden führen zur Vergrößerung der Höhe des unteren Rippenabschnitts und damit eher zu einem verbesserten Kontakt dieses Bereichs zur Riemenscheibe.

Wenn sich an das Rippenmaterial im Aufbau ein anderes Elastomermaterial anschließt, das möglicherweise weniger leitfähig ist und beispielsweise zur Einbettung der Zugträger dienen kann, wird die Absoluthöhe der unteren, leitfähigen Rippenabschnitte vorzugsweise etwas größer als der Minimalwert gewählt. Selbst bei längeren Laufzeiten und einem Einschneiden in dieses andere Material ist die Ableitung von Aufladungen über die Flanken der Rippen immer gewährleistet.

Das Höhenverhältnis der unteren Rippenabschnitte zur Gesamthöhe der Rippe, gemessen an der an der Rippenflanke auftretenden Materialgrenze, beträgt erfindungsgemäß wenigstens 6 %, bevorzugt wenigstens 10 % und besonders bevorzugt wenigstens 14 %.

Die Absoluthöhe der unteren Rippenabschnitte beträgt erfindungsgemäß wenigstens 0,12 mm und bevorzugt wenigstens 0,2 mm, besonders bevorzugt wenigstens 0,25 mm.

In besonders bevorzugten Ausführungsformen besteht das Elastomermaterial der beiden Rippenabschnitte - oberer Rippenabschnitt, der die Rippenspitze umfasst und unterer Rippenabschnitt bis zum Rippenfuß bzw. Rippental - aus demselben Basiselastomer, vorzugsweise einem Gummielastomer oder elastischem Polyurethan. Unter demselben Basiselastomer wird ein chemisch gleiches oder gleichartiges Elastomer bezüglich des polymeren vernetzten Grundmaterials verstanden, ungeachtet möglicherweise unterschiedlicher Additive, Füllstoffe und funktioneller Zusatzstoffe wie Vernetzern, Kettenverlängerern und chemischer Polymermodifikationen. Dasselbe Basiselastomer kann beispielsweise ein natürliches oder synthetisches Kautschukelastomer, wie beispielsweise Naturkautschuk oder Synthesekautschuk einschließlich von Ethylenalphaolefinelastomeren oder SBR-Kautschuken sein, besonders bevorzugt ist ein EPDM-Elastomer. Ebenfalls geeignet sind beispielsweise elastomere Polyurethane. Vorzugsweise basiert dann das nicht-leitfähige Material des oberen Rippenabschnitts ebenso wie das leitfähige Material des unteren Rippenabschnitts und ggf. der angrenzenden Zone in beiden Fällen aus einem Poly-urethan, das unterschiedlich gefüllt sein kann, und bei dem die leitfähige Variante vorzugsweise mit einem gewissen Anteil Leitfähigkeitsruß gefüllt ist.

Allgemein ist es bevorzugt, dass das leitfähige Elastomermaterial der unteren Rippenabschnitte ein rußgefülltes Elastomermaterial ist, da dies ein über lange Jahre bewährtes gut verfügbares Material darstellt. Andere leitfähige Elastomere sind für die Zwecke der Erfindung nicht ausgeschlossen.

Weiterhin ist es bevorzugt, dass das nicht-leitfähige Elastomermaterial der oberen Rippenabschnitte ein hellgefülltes, vorzugsweise ein silicagefülltes Elastomermaterial ist. Derartige Füllstoffe sind dem Fachmann bekannt. Es handelt sich dabei vorzugsweise um oberflächenmodifizierte oder nicht oberflächenmodifizierte Kieselsäuren oder andere anorganische oxidische Materialien wie Aluminiumoxide, Alumosilikate, Zinkoxide, Titanoxide, Bariumsulfat, Caolin o.ä..

In Weiterbildung der Erfindung soll das Höhenverhältnis der unteren Rippenabschnitte zur Rippenhöhe kleiner oder gleich 95 %, vorzugsweise kleiner oder gleich 70 % und weiter bevorzugt kleiner oder gleich 50 % sein. In besonders bevorzugten Ausführungsformen ist das Höhenverhältnis der unteren Rippenabschnitte zu den oberen Rippenabschnitten kleiner oder gleich 20 %, insbesondere kleiner oder gleich 15 %, wenn das Material der oberen Rippenabschnitte aufgrund seiner mechanischen Eigenschaften gewählt wurde und eine möglichst große Kontaktfläche mittels der Rippenflanken der oberen Rippenabschnitte bereitgestellt werden soll. Auf diese Weise kann das nicht-leitfähige Hochleistungselastomer der oberen Rippenabschnitte besonders effizient für die Krafteinleitung zur oder von der Rippenscheibe genutzt werden. Soll lediglich eine Farbcodierung vorgenommen werden, kann das Höhenverhältnis der unteren Rippenabschnitte zur Rippengesamthöhe bzw. den oberen Abschnitten dagegen größer ausfallen.

Die Keilrippenriemen können, wie oben schon erwähnt, mit den üblichen Herstellungsverfahren hergestellt werden, wobei zunächst die Materialien für die unteren Rippenabschnitte und die oberen Rippenabschnitte übereinander geschichtet werden, bevor in üblicher Weise geformt oder geschnitten wird. Wird ein Schleifverfahren angewendet, bildet sich die Materialgrenze zwischen dem Elastomer der oberen Rippenabschnitte und dem Elastomer der unteren Rippenabschnitte im Wesentlichen eben und parallel zum Rippenrücken aus. Wird hingegen ein Formverfahren verwendet, spielen die Viskositäten der verschiedenen Mischungen unter Vulkanisations- und Prägebedingungen eine entscheidende Rolle, da sich hiermit die Ausprägung der Abweichung vom parallelen Verlauf einstellen lässt. Durch das Prägen wird das nicht-leitfähige Material der oberen Rippenabschnitte an den Flanken weiter nach unten in Richtung der Rippentäler gedrückt, sodass die Materialgrenze zwischen leitfähigem und nicht-leitfähigem Elastomer im Rippenquerschnitt eine zur Rippenspitze gewölbte Form zeigen wird.

Ein im Formverfahren hergestellter Rippenriemen nach der Erfindung ist daher unter anderem daran zu erkennen, dass der Rippenquerschnitt eine zur Rippenspitze gewölbte Grenzschicht zwischen oberem und unterem Rippenabschnitt zeigt. Das Ausmaß der Wölbung ist von den Eigenschaften der unvulkanisierten Elastomer-Mischungen und den Verarbeitungseigenschaften dieser Elastomere abhängig.

Wird die leitfähige Mischung hochviskos und die nicht-leitfähige Mischung niederviskos gewählt, kann eine ungünstige Verschiebung der Höhenverhältnisse während des Prägeverfahrens weitgehend vermieden werden. Der Grenzschichtverlauf entspricht im Wesentlichen dem des Schleifverfahrens. Wird hingegen die leitfähige Mischung niederviskos und die nicht-leitfähige Mischung hochviskos gewählt, wird die niederviskosere Schicht während des Prägeverfahrens eine starke Verformung erfahren, sodass das Höhenverhältnis der Flankenabschnitte ungünstig verändert wird. Im Extremfall umgibt die nicht-leitfähige Schicht die leitfähige Schicht im Rippenbereich komplett und es könnte kein Kontakt zwischen dem leitfähigen Material und einer eingreifenden Riemenscheibe hergestellt werden.

In Weiterbildung der Erfindung ist daher vorgesehen, dass bei Anwendung eines Formverfahrens die zur Ausprägung der oberen Rippenabschnitte vorgesehene Schicht aus einem nicht-leitfähigen Elastomer gebildet wird, welches im unvulkanisierten Zustand niedrigviskoser ist als das für die unteren Rippenabschnitte verwendete leitfähige Elastomer.

Im Folgenden wird die Erfindung anhand von Ausführungsbeispielen näher erläutert, die in der beigefügten Zeichnung dargestellt sind.

### Figurenkurzbeschreibung

- Figur 1: dreirippiger Rippenriemen in schematischer Querschnittsdarstellung, im Prägeverfahren hergestellt,
- Figur 2: fünfrippiger Rippenriemen in schematischer Querschnittsdarstellung, im Schleifverfahren hergestellt.

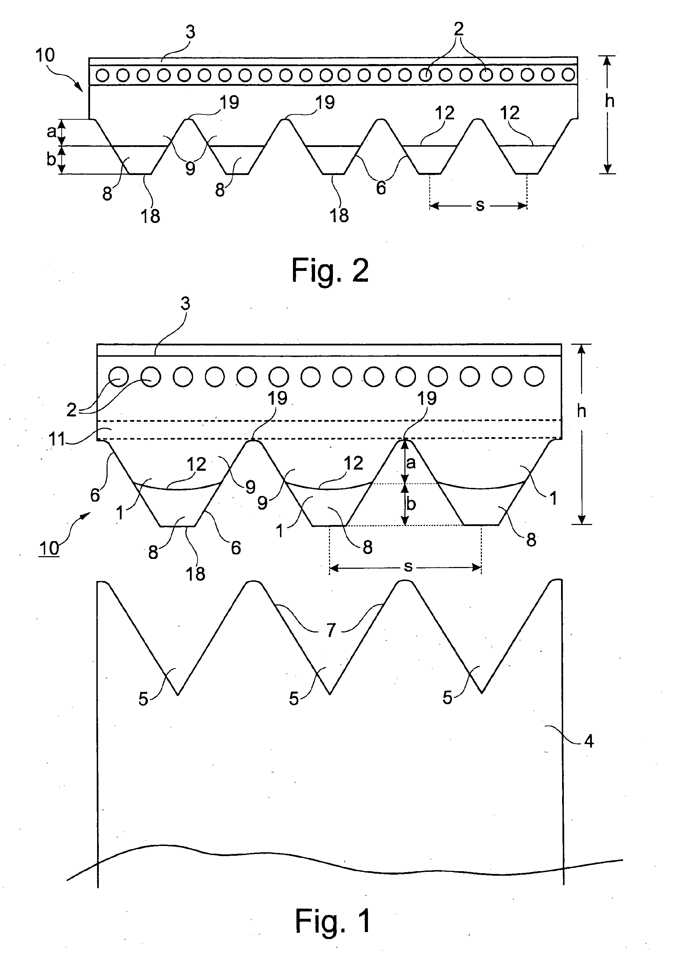

Figur 1 zeigt einen im Ganzen mit 10 bezeichneten Keilrippenriemen mit der Riemenhöhe h und dem Rippenabstand s, der drei Rippen 1 aufweist, und darunter einen Teil einer zugehörigen mehrrilligen Riemenscheibe 4 mit den einzelnen Rillen 5 in schematischer Darstellung. Der Riemen besitzt eine Vielzahl von Zugträgern 2, die nahe des Rippenrückens 3 angeordnet sind. Bei Eingriff der Rippen 1 des Rippenriemens 10 in die Rillen 5 der Riemenscheibe 4 wirken beide zusammen und die Flanken 6 der Rippen 1 treten in Kontakt mit den Flanken 7 der Rillen 5. Jede Rippe 1 des Rippenriemens besitzt einen oberen Rippenabschnitt 8, der die Rippenspitzen 18 umfasst, und einen unteren Rippenabschnitt 9, der sich bis auf die Höhe der Rippentäler 19 am Fuß der Rippe erstreckt. Im vorliegenden Ausführungsbeispiel bilden die unteren Rippenabschnitte 9 gemeinsam mit einer angrenzenden Zone 11, die die Rippentäler 19 umschließt, einen sich über die gesamte Breite des Riemens erstreckenden durchgehenden Bereich, der insgesamt aus dem leitfähigen Elastomermaterial der unteren Rippenabschnitte 9 besteht. Der Keilrippenriemen nach Figur 1 ist ein geprägter Rippenriemen, bei dem die Materialgrenze 12 zwischen dem leitfähigem Elastomer der unteren Rippenabschnitte 9 und dem nicht-leitfähigem Elastomer der oberen Rippenabschnitte 8 leicht in Richtung der Rippenspitzen 18 gewölbt ist. Die Höhe a der unteren Rippenabschnitte 9 bestimmt sich aus der Höhe zwischen dem Rippental und der Materialgrenze 12 an der Rippenflanke 6. Die Höhe der oberen Rippenabschnitte 8 bestimmt sich aus der Höhendifferenz zwischen der Materialgrenze 12 an der Rippenflanke 6 und der Höhe der Rippenspitze 18. Durch das besondere Prägeverfahren der Erfindung ist die Materialgrenze 12 nur leicht gewölbt, sodass das leitfähige Material der unteren Rippenabschnitte über einen hinlänglichen Bereich der Rippenflanke 6 freiliegt.

Figur 2 zeigt demgegenüber einen entsprechenden, jedoch fünfrippigen Rippenriemen 10 mit einer ebenen Materialgrenze 12, der im Schleifverfahren hergestellt wurde.

Die optimalen Höhenverhältnisse a/(a+b) für diese Testkonfiguration wurden experimentell bestimmt. Die Testergebnisse sind nachfolgend wiedergegeben. Ein minimaler Absolutwert von wenigstens 0,12 mm für die Höhe der unteren Rippenabschnitte "a" ergab immer eine ausreichende Leitfähigkeit/Spannungsableitung.

### Leitfähigkeitstest

Es wurden Rippenriemen des Profils PK untersucht, deren Riemenkörper aus einem EPDM bestanden. Die leitfähige Rippenmischung A enthielt hochleitfähige Ruße in einem Gewichtsanteil zwischen 10 und 25 Gewichtsprozent sowie weitere geringere Anteile wenig leitender Ruße. Die nicht-leitfähige Rippenmischung B enthielt keinen Ruß, sondern kieselsäurebasierte Füllstoffe.

### Testanordnung

Für die Testanordnung wurden zwei Riemenscheiben (PK-Profil, Außendurchmesser gleich 50,00 mm) im Abstand von 10 cm zueinander (Mittelabstand) so an einer nicht elektrisch leitfähigen Platte montiert, dass ein in beide Riemenscheiben eingelegter Keilrippenriemen durch eine Zugmasse von 10 kg in die Riemenscheiben gepresst wurde. Hierzu wurde der Riemen an einem Ende festgelegt und an seinem anderen Ende mit einem Gewicht von 10 kg beschwert. Der Kontakt zwischen den beiden äußeren Rippen des Riemens und dem zugehörigen Profil der Riemenscheibe wurde isoliert, um zu gewährleisten, dass für diese Untersuchung nur im Inneren Rippenbereich der Kontakt zwischen Riemenscheibe und Riemen hergestellt wurde. Gemessen wurde die Leitfähigkeit von Riemenscheibe zu Riemenscheibe bei einer Spannung von 500 V.

Die Versuchsergebnisse sind in Tabelle 1 gezeigt:

**Tabelle 1: Versuchsergebnisse, Beispielprofil PK**

| **Muster** | **Leitfähigkeit in %** | **Gesamtaufbauhöhe/ Riemenhöhe (mm)** | **a/(a+b)** |
|---|---|---|---|
| 1 | 100 | 5,090 | 0,084 |
| 2 | 100 | 5,070 | 0,122 |
| 3 | 100 | 5,040 | 0,100 |
| 4 | 100 | 5,060 | 0,117 |
| 5 | 100 | 5,040 | 0,122 |
| 6 | 100 | 5,020 | 0,071 |
| 7 | 100 | 5,040 | 0,122 |
| 8 | 100 | 5,060 | 0,060 |
| Mittelwert | | | 0,10 |

Leitfähigkeit setzt etwa bei einem [a/(a+b)]-Verhältnis von 0,06 bis 0,13 ein. Die minimale Höhe a betrug für die funktionsfähigen Beispiele ab 0,12 mm.

### Bezugszeichenliste

- 1: Rippe
- 2: Zugträger
- 3: Riemenrücken
- 4: Riemenscheibe
- 5: Riemenscheibenrille
- 6: Rippenflanke
- 7: Rillenflanke
- 8: oberer Rippenabschnitt
- 9: unterer Rippenabschnitt
- 10: Keilrippenriemen
- 11: Zone
- 12: Materialgrenze
- 18: Rippenspitze
- 19: Rippental
- a: Höhe des unteren Rippenabschnitts
- b: Höhe des oberen Rippenabschnitts
- a+b: Rippengesamthöhe
- h: Riemenhöhe
- s: Rippenabstand

## Patentansprüche

1. Keilrippenriemen (10) mit mehreren Rippen (1) für den Eingriff einer mehr-rilligen Riemenscheibe (4), wobei der Riemen wenigstens zwei unterschiedliche Elastomermaterialien aufweist, **dadurch gekennzeichnet, dass**
- die oberen, zur Riemenscheibe (4) weisenden Rippenabschnitte (8) aus einem elektrisch nicht leitendem Elastomermaterial bestehen,
- die unteren Rippenabschnitte (9) aus einem elektrisch leitendem Elastomermaterial bestehen und
- das Höhenverhältnis a/(a+b) der Höhe (a) der unteren Rippenabschnitte (9) zur Gesamthöhe (a+b) der Rippe (1), gemessen an der an der Rippenflanke (6) auftretenden Materialgrenze (12), wenigstens 6 % beträgt oder die Absoluthöhe (a) der unteren Rippenabschnitte (9) wenigstens 0,12 mm beträgt.

2. Keilrippenriemen (10) nach Anspruch 1, **dadurch gekennzeichnet, dass** die Absoluthöhe (a) von wenigstens 0,12 mm sich auf Profile mit einer Rippenhöhe (a+b) von 1,8 mm bis 20 mm und einem Rippenabstand (s) zwischen 1 mm und 16 mm und insbesondere die Standardprofile PH, PJ, PK, PL, PM bezieht.

3. Keilrippenriemen (10) nach Anspruch 1 oder 2, **dadurch gekennzeichnet, dass** die unteren Rippenabschnitte (9) und eine angrenzende Zone (11), die die Rippentäler (19) umfasst und sich über die gesamte Breite des Riemens (10) erstreckt, insgesamt aus dem leitfähigen Elastomermaterial der unteren Rippenabschnitte (9) bestehen.

4. Keilrippenriemen (10) nach einem der Ansprüche 1 bis 3, **dadurch gekennzeichnet, dass** das Elastomermaterial der beiden Rippenabschnitte (8, 9) aus demselben Basiselastomer, vorzugsweise einem Gummielastomer oder elastischem Polyurethan, besteht.

5. Keilrippenriemen (10) nach einem der Ansprüche 1 bis 4, **dadurch gekennzeichnet, dass** das leitfähige Elastomermaterial der unteren Rippenabschnitte (9) ein rußgefülltes Elastomermaterial ist.

6. Keilrippenriemen (10) nach einem der Ansprüche 1 bis 5, **dadurch gekennzeichnet, dass** das nicht leitfähige Elastomermaterial der oberen Rippenabschnitte (8) ein hell gefülltes, vorzugsweise ein silicagefülltes Elastomermaterial ist.

7. Keilrippenriemen (10) nach einem der Ansprüche 1 bis 5, **dadurch gekennzeichnet, dass** das Höhenverhältnis a/(a+b) der Höhe (a) der unteren Rippenabschnitte (9) zur Gesamthöhe (a+b) der Rippe (1) kleiner oder gleich 95 %, vorzugsweise kleiner oder gleich 70 %, weiter vorzugsweise kleiner oder gleich 50 % ist.

8. Keilrippenriemen (10) nach einem der Ansprüche 1 bis 7, **dadurch gekennzeichnet, dass** es sich um einen in einem Formverfahren hergestellten Riemen handelt, dessen Rippenquerschnitt eine zur Rippenspitze (18) gewölbte Grenzschicht (12) zwischen oberem und unterem Rippenabschnitt (8, 9) zeigt.

9. Keilrippenriemen (10) nach einem der Ansprüche 1 bis 7, **dadurch gekennzeichnet, dass** es sich um einen in einem Schleifverfahren hergestellten Riemen handelt, dessen Rippenquerschnitt eine im Wesentlichen ebene Grenzschicht (12) zwischen oberem und unterem Rippenabschnitt (8, 9) aufweist.

10. Verfahren zur Herstellung eines Keilrippenriemens (10) nach einem der Ansprüche 1 bis 8, **dadurch gekennzeichnet, dass** der Riemen in einem Formverfahren hergestellt wird und die für die Ausprägung der oberen Rippenabschnitte (8) verwendete Schicht aus einem nicht leitfähigem Elastomer gebildet wird, welches während des Formprozesses in einem Vulkanisationswerkzeug weniger viskos ist als das für die unteren Rippenabschnitte (9) verwendete leitfähige Elastomer.

11. Verfahren zur Herstellung eines Keilrippenriemens (10) nach einem der Ansprüche 1 bis 7 und 9, **dadurch gekennzeichnet, dass** der Riemen in einem Schleifverfahren hergestellt wird, wobei die Elastomere für die Rippenabschnitte (8, 9) schichtweise übereinander aufgebracht werden und die Rippen (1) daraus in einem nachfolgenden Verfahrensschritt, ggf. nach einer Vulkanisation, durch Schleifen ausgebildet werden.

## Claims

1. A V-ribbed belt (10) having a plurality of ribs (1) for the engagement of a multi-grooved belt pulley (4), the belt having at least two different elastomer materials, **characterized in that**
- the upper rib segments (8), pointing toward the belt pulley (4), consist of an elastomer material that is electrically non-conductive,
- the lower rib segments (9) consist of an electrically conductive elastomer material, and
- the height ratio a/(a+b) of the height (a) of the lower rib segments (9) to the overall height (a+b) of the rib (1), measured at the material boundary (12) occurring at the rib flank (6), is at least 6%, or the absolute height (a) of the lower rib segments (9) is at least 0.12 mm.

2. The V-ribbed belt (10) as claimed in claim 1, **characterized in that** the absolute height (a) of at least 0.12 mm relates to profiles having a rib height (a+b) of 1.8 mm to 20 mm and a rib spacing (s) between 1 mm and 16 mm, and in particular to the standard profiles PH, PJ, PK, PL, PM.

3. The V-ribbed belt (10) as claimed in claim 1 or 2, **characterized in that** the lower rib segments (9) and an adjacent zone (11), which comprises the rib valleys (19) and extends over the entire width of the belt (10), consist entirely of the conductive elastomer material of the lower rib segments (9).

4. The V-ribbed belt (10) as claimed in one of claims 1 to 3, **characterized in that** the elastomer material of the two rib segments (8, 9) consists of the same basic elastomer, preferably a rubber elastomer or resilient polyurethane.

5. The V-ribbed belt (10) as claimed in one of claims 1 to 4, **characterized in that** the conductive elastomer material of the lower rib segments (9) is an elastomer material filled with carbon black.

6. The V-ribbed belt (10) as claimed in one of claims 1 to 5, **characterized in that** the non-conductive elastomer material of the upper rib segments (8) is a white-filled, preferably a silica-filled, elastomer material.

7. The V-ribbed belt (10) as claimed in one of claims 1 to 5, **characterized in that** the height ratio a/(a+b) of the height (a) of the lower rib segments (9) to the overall height (a+b) of the rib (1) is less than or equal to 95%, preferably less than or equal to 70%, further preferably less than or equal to 50%.

8. The V-ribbed belt (10) as claimed in one of claims 1 to 7, **characterized in that** it is a belt produced in a molding method, the rib cross section of which exhibits a boundary layer (12) between the upper and lower rib segment (8, 9) that is curved toward the rib tip (18).

9. The V-ribbed belt (10) as claimed in one of claims 1 to 7, **characterized in that** it is a belt produced in a grinding method, the rib cross section of which exhibits a substantially flat boundary layer (12) between the upper and lower rib segment (8, 9).

10. A method for producing a V-ribbed belt (10) as claimed in one of claims 1 to 8, **characterized in that** the belt is produced in a molding method, and the layer used for the shaping of the upper rib segments (8) is formed from a non-conductive elastomer which, during the molding process in a vulcanization mold, is less viscous than the conductive elastomer used for the lower rib segments (9).

11. A method for producing a V-ribbed belt (10) as claimed in one of claims 1 to 7 and 9, **characterized in that** the belt is produced in a grinding method, the elastomers for the rib segments (8, 9) being applied over one another in layers, and the ribs (1) being formed therefrom by grinding in a following method step, possibly following vulcanization.

## Revendications

1. Courroie trapézoïdale à nervures (10) comprenant plusieurs nervures (1) pour l'engagement d'une poulie à courroie (4) à plusieurs gorges, la courroie comprenant au moins deux matériaux élastomères différents, **caractérisée en ce que**
- les portions de nervure supérieures (8) tournées vers la poulie à courroie (4) sont constituées d'un matériau élastomère électriquement non conducteur,
- les portions de nervure inférieures (9) sont constituées d'un matériau élastomère électriquement conducteur et
- le rapport de hauteur a/(a+b) de la hauteur (a) des portions de nervure inférieures (9) par rapport à la hauteur totale (a+b) de la nervure (1), mesuré à la limite des matériaux (12) survenant sur le flanc de nervure (6), valant au moins 6 % ou la hauteur absolue (a) des portions de nervure inférieures (9) valant au moins 0,12 mm.

2. Courroie trapézoïdale à nervures (10) selon la revendication 1, **caractérisée en ce que** la hauteur absolue (a) d'au moins 0,12 mm se rapporte à des profils présentant une hauteur de nervure (a+b) de 1,8 mm à 20 mm et un écartement entre nervures (s) entre 1 mm et 16 mm et en particulier aux profils standard PH, PJ, PK, PL, PM.

3. Courroie trapézoïdale à nervures (10) selon la revendication 1 ou 2, **caractérisée en ce que** les portions de nervure inférieures (9) et une zone adjacente (11) qui entoure les creux de nervure (19) et s'étend sur toute la largeur de la courroie (10) sont constituées dans l'ensemble du matériau élastomère conducteur des portions de nervure inférieures (9).

4. Courroie trapézoïdale à nervures (10) selon l'une quelconque des revendications 1 à 3, **caractérisée en ce que** le matériau élastomère des deux portions de nervure (8, 9) est constitué du même élastomère de base, de préférence d'un élastomère caoutchouteux ou d'un polyuréthane élastique.

5. Courroie trapézoïdale à nervures (10) selon l'une quelconque des revendications 1 à 4, **caractérisée en ce que** le matériau élastomère conducteur des portions de nervure inférieures (9) est un matériau élastomère chargé de suie.

6. Courroie trapézoïdale à nervures (10) selon l'une quelconque des revendications 1 à 5, **caractérisée en ce que** le matériau élastomère non conducteur des portions de nervure supérieures (8) est un matériau élastomère chargé de manière claire, de préférence chargé de silice.

7. Courroie trapézoïdale à nervures (10) selon l'une quelconque des revendications 1 à 5, **caractérisée en ce que** le rapport de hauteur a/(a+b) de la hauteur (a) des portions de nervure inférieures (9) par rapport à la hauteur totale (a+b) de la nervure (1) est inférieur ou égal à 95 %, de préférence inférieur ou égal à 70 %, de manière encore plus préférée inférieur ou égal à 50 %.

8. Courroie trapézoïdale à nervures (10) selon l'une quelconque des revendications 1 à 7, **caractérisée en ce qu'**il s'agit d'une courroie fabriquée suivant un procédé de moulage, dont la section transversale de nervure présente une couche limite (12) bombée vers la pointe de nervure (18) entre les portions de nervure supérieure et inférieure (8, 9).

9. Courroie trapézoïdale à nervures (10) selon l'une quelconque des revendications 1 à 7, **caractérisée en ce qu'**il s'agit d'une courroie fabriquée suivant un procédé de meulage, dont la section transversale de nervure présente une couche limite (12) essentiellement plane entre les portions de nervure supérieure et inférieure (8, 9).

10. Procédé de fabrication d'une courroie trapézoïdale à nervures (10) selon l'une quelconque des revendications 1 à 8, **caractérisé en ce que** la courroie est fabriquée suivant un procédé de moulage et la couche utilisée pour le moulage des portions de nervure supérieures (8) est formée à partir d'un élastomère non conducteur, lequel, pendant le processus de moulage dans un outil de vulcanisation, est moins visqueux que l'élastomère conducteur utilisé pour les portions de nervure inférieures (9).

11. Procédé de fabrication d'une courroie trapézoïdale à nervures (10) selon l'une quelconque des revendications 1 à 7 et 9, **caractérisé en ce que** la courroie est fabriquée suivant un procédé de meulage, les élastomères pour les portions de nervure (8, 9) étant appliqués par-couches les uns sur les autres et les nervures (1) étant formées par meulage à partir de ceux-ci dans une étape de procédé suivante, éventuellement après une vulcanisation.
